# FASCICULE DE BREVET EUROPEEN

(11) **EP 0 509 853 B1**
(45) Date de publication et mention de la délivrance du brevet: **28.08.1996**
(21) Numéro de dépôt: 92400495.5
(22) Date de dépôt: 26.02.1992
(51) Int. Cl.: H01H 9/02, H01R 9/16

(54) **Dispositif et bloc de verrouillage des bornes de raccordement et de pontage des appareils électriques modulaires**
Vorrichtung und Verriegeleinheit für Anschlussklemmen und Sammelschiene von Modularen elektrischen Geräten
Device and locking unit for terminals and bus bar of electrical modular apparatuses

(30) Priorité: 16.04.1991 FR 9104624
(43) Date de publication de la demande: 21.10.1992
(73) Titulaire: HAGER ELECTRO S.A., F-67210 Obernai (FR)
(72) Inventeur: Fischer, Claude, F-69870 Bischoffsheim (FR)
(74) Mandataire: Bernasconi, Jean

(56) Documents cités:
- DE-A- 3 138 042
- DE-U- 8 513 425
- DE-U- 8 708 744
- FR-A- 2 580 860

## Description

La présente invention concerne un dispositif de verrouillage des bornes de raccordement et de pontage dites à cage des appareils électriques modulaires, notamment ceux destinés à être montés sur un rail de support commun. Les appareils électriques modulaires comprennent d'une façon générale un boîtier dont l'épaisseur est égale à un module ou à un multiple de ce module. Parmi ce type d'appareils, l'invention concerne ceux conçus pour pouvoir recevoir une barre de pontage, par exemple en forme de "peigne", et qui présentent à cet effet, au-dessus du logement usuel pour la borne à cage proprement dite, une cavité dite de pontage, débouchant latéralement et frontalement, dans laquelle se situe la tête de la vis de serrage de la borne à cage, et, éventuellement, au-dessous de cette tête, une plaque conductrice raccordée à la cage pour assurer dans de bonnes conditions le raccordement électrique de la barre de pontage dont une partie est engagée et serrée entre la tête de vis et ladite plaque conductrice.

Dans les installations électriques comportant de tels appareils, il peut être souhaitable d'empêcher une personne non habilitée de modifier les connexions existantes et/ou d'effectuer un pontage non autorisé lorsqu'il n'en a pas été établi.

La demande de brevet français n° 2 580 860 décrit un dispositif de verrouillage d'une borne à cage simple, c'est-à-dire sans cavité de pontage, en présence ou en l'absence de connexion à ladite borne. Ce dispositif cache-borne est formé d'un capot isolant en deux parties articulées se plaçant à l'extérieur de la partie du boîtier logeant la borne à cage et d'une patte qui s'insère dans la borne à cage et qui est munie d'un trou pour permettre le passage de la vis de serrage et empêcher alors le retrait dudit dispositif. L'inviolabilité est assurée par un plombage et grâce également à ladite patte. Ce dispositif doit être mis en place lors de la réalisation de la connexion et nécessite l'adaptation du boîtier pour la réalisation du plombage.

La demande de brevet allemand n° 3 138 042 décrit également un cache-borne pour borne de connexion usuelle, verrouillable par plombage, mais constitué de deux pièces, à savoir une première pièce venant se clipser dans le trou d'accès à la vis de serrage et une deuxième pièce recouvrant ledit trou et permettant d'assurer le verrouillage par plombage.

Le modèle d'utilité allemand n° 8 708 744.8 décrit un dispositif de verrouillage d'une borne de raccordement et de pontage dite à cage d'un appareil électrique modulaire, de manière à interdire tout pontage et toutes modifications de connexion à ladite borne, laquelle borne comporte une vis de serrage normalement accessible de l'extérieur de l'appareil électrique modulaire. L'appareil comprend un boîtier présentant, sur ses faces avant et/ou arrière, un logement pour la borne à cage, surmonté d'une cavité de pontage qui est créée par le montage d'une pièce rapportée adéquate et débouche latéralement et frontalement et dans laquelle se trouve la tête de la vis de serrage de la borne à cage. La partie du boîtier formée par cette pièce rapportée forme le sommet de ladite cavité de pontage et présente une ouverture supérieure d'accès à la tête de la vis de serrage. Le dispositif de verrouillage comprend une pièce de blocage réalisée en matériau isolant électriquement et agencée de manière à pouvoir venir se clipser de façon amovible dans la cavité de pontage, par insertion dans celle-ci, et un moyen de verrouillage de ladite pièce de blocage en place, qui se présente sous la forme d'un plombage.

La présente invention a donc pour objectif de fournir un dispositif permettant d'assurer un tel verrouillage de la borne de raccordement et de pontage de ce type d'appareils électriques modulaires, et cela de façon simple et peu onéreuse.

Un autre objectif de l'invention est de fournir un tel dispositif qui soit utilisable pour le verrouillage simultané de plusieurs appareils électriques modulaires juxtaposés sur un rail de support.

L'invention a donc pour objet un dispositif de verrouillage tel que défini à la revendication 1.

Le dispositif de verrouillage selon l'invention présente donc l'avantage supplémentaire d'empêcher tout contact accidentel avec les parties sensibles de la cavité de pontage, notamment avec la vis de serrage et, le cas échéant, avec la plaque conductrice décrite au début, et donc d'apporter un élément de sécurité à l'utilisateur.

De préférence, dans le dispositif de verrouillage selon l'invention, la pièce de blocage vient se clipser élastiquement et de façon amovible dans ladite cavité de pontage et le moyen de verrouillage est un élément rigide conçu pour venir verrouiller ladite pièce de blocage par entretoisement. L'élément rigide est de préférence un rabat articulé sur ladite pièce de blocage et notamment un rabat venant de moulage d'un seul tenant avec la pièce de blocage.

De préférence, l'élément rigide et la pièce de blocage comprennent chacun au moins une oreille ou analogue percée d'au moins un trou, les deux trous respectifs étant conçus pour venir coïncider lorsque l'élément rigide et la pièce de blocage sont en place, de façon à permettre le passage d'un câble à plomber ou analogue servant de témoin d'effraction.

D'une façon générale, la pièce de blocage a sensiblement la forme d'un U en coupe transversale, avec une branche inférieure présentant un évidement pour la vis de serrage et une branche supérieure munie d'au moins un relief supérieur conçu pour venir coopérer avec un moyen de butée préexistant ou prévu spécialement dans ladite paroi formant le sommet de la cavité de pontage, la pièce de blocage étant en outre munie de parois latérales empêchant tout accès latéralement à la cavité de pontage.

De préférence, la branche inférieure de la pièce de blocage se prolonge par un rabat dont elle est séparée par une partie amincie formant charnière et qui comporte à son extrémité opposée au moins un relief, tandis que la branche supérieure présente au moins un renfoncement ou passage destiné à recevoir par verrouillage élastique ledit relief du rabat.

L'invention a encore pour objet un bloc destiné au verrouillage des bornes de raccordement et de pontage de plusieurs appareils électriques modulaires juxtaposés, ce bloc étant conçu pour s'étendre dans l'ensemble des cavités de pontage des appareils juxtaposés et comprenant au moins un dispositif de verrouillage selon l'invention.

De préférence, les parois constituant la pièce de blocage et l'élément rigide du dispositif de verrouillage se prolongent latéralement pour former ledit bloc.

De préférence, ledit bloc de verrouillage présente une longueur égale à un multiple du module des appareils électriques modulaires considérés et, au-delà de quatre modules, présente de préférence au moins deux dispositifs de verrouillage selon l'invention.

De façon particulièrement préférée, l'un au moins des dispositifs de verrouillage et/ou certains au moins des modules du bloc de verrouillage sont séparés des dispositifs de verrouillage ou modules adjacents par une zone d'affaiblissement permettant la séparation des dispositifs de verrouillage et/ou modules de façon à permettre l'utilisation d'une partie donnée du bloc de verrouillage pour un nombre restreint d'appareils modulaires juxtaposés, voire pour un seul de ces appareils. De préférence alors, le bloc de verrouillage selon l'invention comporte des parois d'un côté ou de part et d'autre des zones d'affaiblissement, ces parois formant des parois latérales après séparation des dispositifs de verrouillage ou des modules.

L'invention va être maintenant décrite plus en détail à l'aide d'un mode de réalisation pris à titre d'exemple non limitatif et se référant au dessin annexé dans lequel :
- la figure 1 est une vue schématique partielle d'un appareil électrique modulaire selon l'invention, montrant, en coupe transversale médiane, la borne de raccordement et de pontage verrouillée par un dispositif de verrouillage selon l'invention ;
- les figures 2 et 3 sont respectivement des vues en perspective de dessus et de dessous d'un bloc de verrouillage conforme à l'invention, le rabat étant en position ouverte ;
- les figures 4 et 5 sont des vues analogues à celles des figures 2 et 3, le rabat étant en position fermée ;
- la figure 6 est une vue de côté d'un appareil électrique modulaire avec le bloc de verrouillage vu en coupe transversale suivant la ligne de coupe VI-VI de la figure 4 ;
- les figures 7 et 8 sont respectivement des vues de dessous et de dessus en perspective, montrant les bornes à cage de quatre appareils électriques modulaires juxtaposés, verrouillées par un bloc de verrouillage selon les figures 2 à 5 ; et
- les figures 9 et 10 sont des vues en perspective, partielle pour la figure 10, du bloc de verrouillage, montrant de façon plus précise son agencement intérieur.

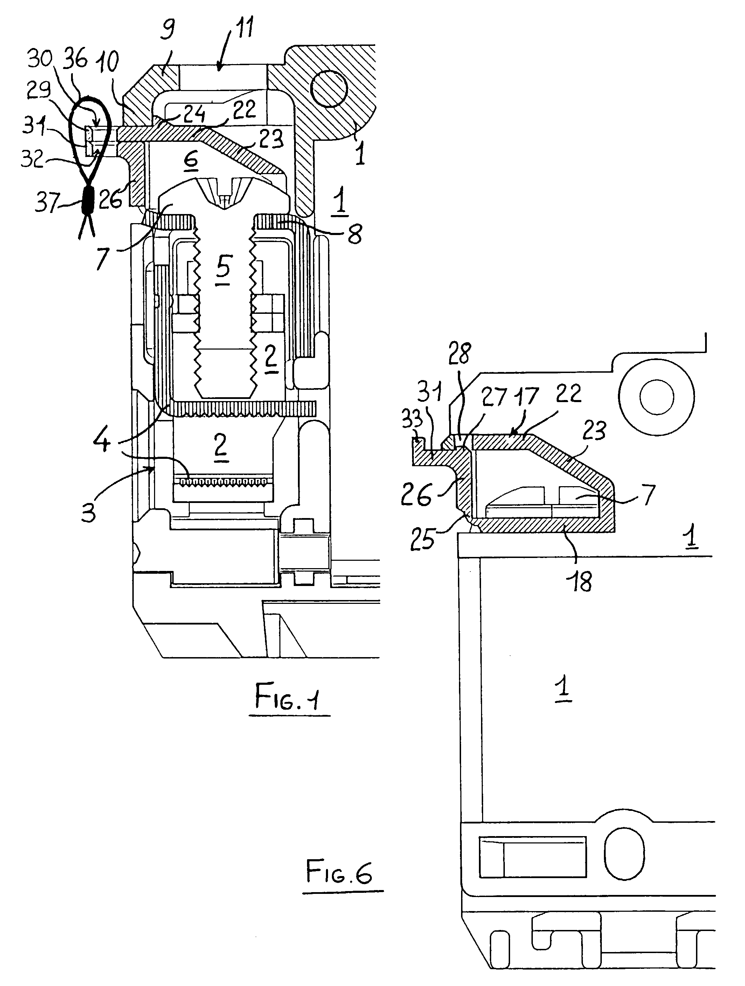

Il est bon tout d'abord de rappeler, à l'aide de la figure 1, la structure d'une borne de raccordement et de pontage usuelle, dite à cage. Dans sa partie frontale représentée, l'appareil électrique modulaire présente, dans un boîtier 1, un logement 2 pour une borne usuelle 3 à cage 4, ci-après borne à cage 3, et à vis de serrage 5. Le logement 2 est surmonté d'une cavité 6 dite de pontage dans laquelle se situe la tête 7 de la vis de serrage 5. Le fond de cette cavité de pontage 6 est constitué par une plaque conductrice 8 reliée électriquement à la borne à cage 3. Le boîtier 1 s'étend au-dessus de la cavité de pontage 6 par une partie 9 présentant un rebord frontal 10 et, dans le prolongement de l'axe de la vis de serrage 5, un orifice 11 prévu pour permettre l'accès, à l'aide d'un outil approprié, à la vis de serrage 5 en vue de son serrage ou de son desserrage.

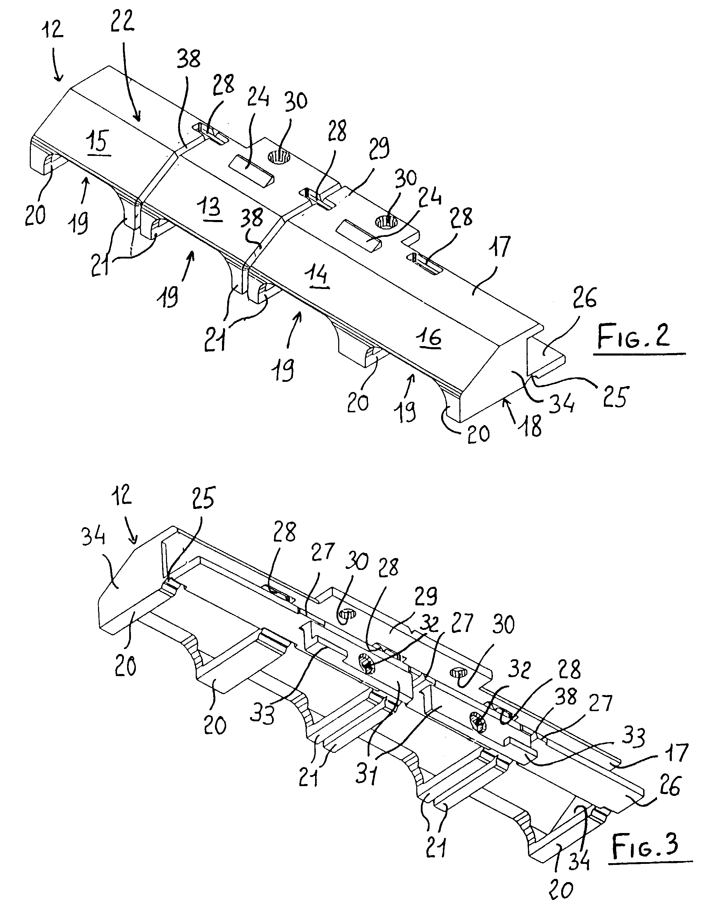

On se réfère maintenant aux figures 2 à 5 qui représentent un bloc de verrouillage conforme à l'invention, prévu par exemple pour verrouiller simultanément les bornes à cage de quatre appareils électriques de même épaisseur ou module.

Le bloc de verrouillage 12 est réalisé en une seule pièce en matière plastique moulée et est subdivisé en quatre parties de dimensions sensiblement égales à 1 module, deux parties centrales contiguës 13, 14 et deux parties latérales 15, 16.

Le bloc de verrouillage 12 a une forme générale en U en coupe transversale, avec une branche supérieure continue 17 et une branche inférieure discontinue 18. Cette dernière est destinée à venir s'appliquer sur le fond de la cavité de pontage 6 et présente donc, pour chaque module, un évidement 19 pour le passage de la tête 7 de la vis de serrage 5. La branche inférieure 18 subsiste entre ces évidements 19, c'est-à-dire au voisinage des plans de séparation des parties 13 à 16 ainsi qu'à chaque extrémité du bloc de verrouillage 12, sous forme d'appuis simples 20, aux extrémités du bloc et entre les parties 14 et 16, et sous forme d'appuis 21 de chaque côté du plan de séparation entre les parties 13 et 15, respectivement 13 et 14.

La branche supérieure 17 comporte un plateau 22 parallèle à la branche inférieure 18 à laquelle elle se raccorde par un pan incliné 23. Au centre de chacune des parties 13 et 14, le plateau 22 présente un relief 24 conçu pour venir coopérer avec le rebord frontal 10 du boîtier 1 de l'appareil électrique modulaire, à savoir venir en prise derrière ce rebord frontal 10.

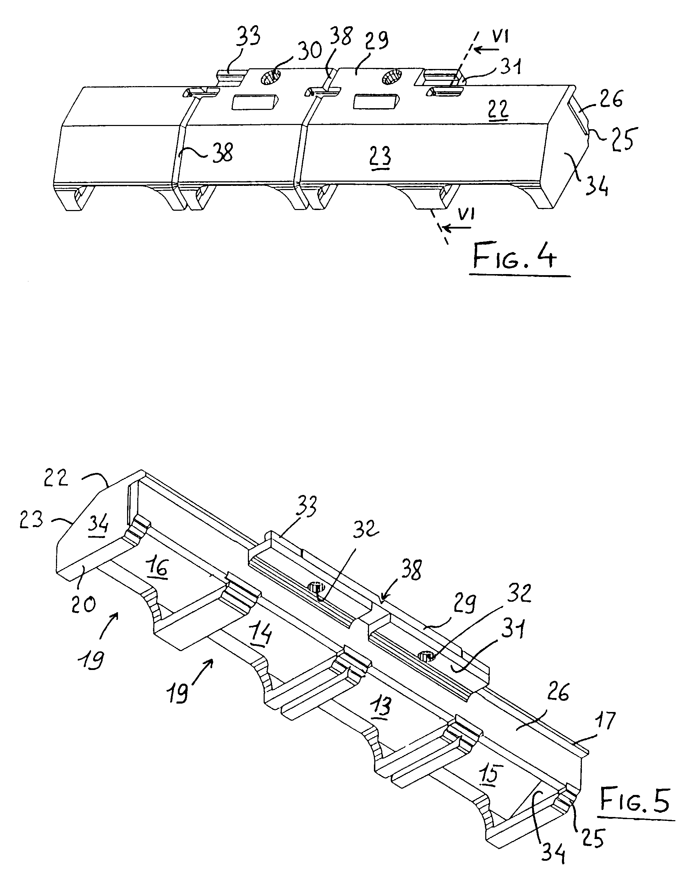

A leur extrémité libre, les appuis 20 et 21 se prolongent, par l'intermédiaire d'une zone d'affaiblissement 25 formant charnière, par une pièce longitudinale s'étendant sur toute la longueur du bloc de verrouillage, pièce qui forme un rabat 26 muni sur sa tranche de trois reliefs 27 (voir figure 3) agencés de manière à venir en prise dans des cavités correspondantes 28 prévues dans le plateau 22, à cheval sur les plans de séparation des parties 13 et 15, respectivement 14 et 16, respectivement 13 et 14.

La partie du plateau 22 commune aux parties centrales 13 et 14 se prolonge à l'opposé du pan incliné 23 par une saillie ou oreille 29 dans laquelle, pour chaque partie centrale 13 et 14, est pratiqué un trou 30.

Sur sa face tournée vers l'extérieur du bloc 12 en position fermée (figures 3 et 5), le rabat 26 présente deux parties en saillie 31 agencées de manière à pouvoir venir en contact plan contre la face inférieure de l'oreille 29. Chaque partie en saillie 31 comporte un trou 32 venant coïncider avec le trou 30 correspondant lorsque le rabat 26 est fermé (figure 5) et une patte 33, chaque patte 33 venant se placer sur un côté de l'oreille 29 (figure 4).

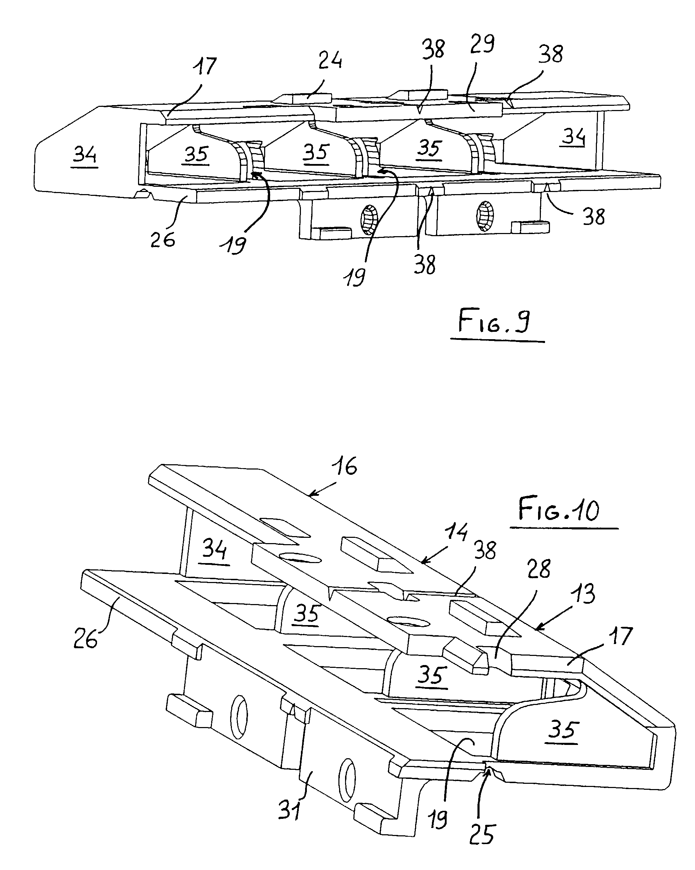

Le bloc de verrouillage 12 présente encore des parois latérales d'extrémité 34 et, de préférence, des parois 35 parallèles auxdites parois 34, reliant chacun ou certains des appuis 21, des parties centrales 13 et 14, et éventuellement des appuis 20 des parties latérales 15 et 16, à la branche supérieure 17 (figures 9 et 10).

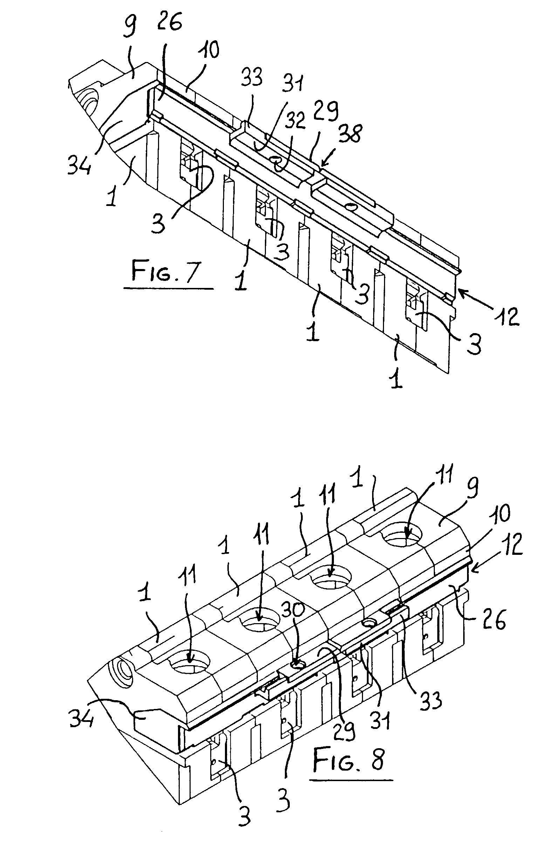

La mise en place du bloc de verrouillage 12 s'effectue rabat 26 ouvert, en introduisant à force ledit bloc dans les cavités de pontage 6 jusqu'à ce que les reliefs 24 viennent en prise élastiquement derrière les rebords frontaux 10 correspondants (figure 1). On ferme ensuite le rabat 26 dont les reliefs 27 viennent en prise dans les cavités 28 correspondantes (figure 6), le rabat étant conçu pour assurer en quelque sorte un entretoisement entre la branche supérieure 17 et les appuis 20, 21 de façon à empêcher la libération des reliefs 24 tant que le rabat 26 est en place.

On peut ensuite parfaire le verrouillage des bornes 3 des appareils électriques modulaires par la mise en place d'un témoin d'effraction, à savoir d'un ou de deux câbles ou analogues 36 que l'on fait passer dans les trous en coïncidence 30 et 32, et dont on relie ensuite de façon connue en soi les deux extrémités libres par un plomb 37.

Le déverrouillage passe obligatoirement par le retrait du ou des câbles plombés, puis par l'ouverture du rabat 26 en appuyant sur les pattes 33 et enfin par la libération des reliefs 24 en jouant sur l'oreille 29.

Les figures 7 et 8 montrent le bloc de verrouillage en place dans les bornes 3 de quatre appareils électriques modulaires.

Les figures 2 à 5 montrent encore un détail de réalisation avantageux qui permet de diviser manuellement le bloc de verrouillage lorsque l'on désire utiliser le dispositif de verrouillage pour un, deux ou trois appareils ou modules.

Il est prévu, à cet effet, deux lignes d'affaiblissement 38 s'inscrivant dans le plan de séparation des parties 13 et 15, respectivement 13 et 14. On peut ainsi utiliser en cas de besoin la partie centrale 13 seule ou en combinaison soit avec la partie latérale 15, soit avec les parties centrale 14 et latérale 16 (figure 10), ou encore utiliser seulement ces deux dernières parties 14 et 16. Les parois 35 peuvent alors servir de parois latérales aux modules de verrouillage ainsi réalisés.

La description de cet exemple de réalisation d'un bloc de verrouillage pour quatre appareils ou modules n'est bien sûr pas limitative. On peut ainsi facilement envisager de réaliser un dispositif de verrouillage pour un seul appareil ou module, en reprenant par exemple la structure de la partie centrale 13 et en disposant éventuellement différemment l'oreille 29, la patte 33, les reliefs 27 et les cavités 28. On peut ainsi réaliser une oreille 29 centrée de part et d'autre de laquelle viendraient se disposer deux pattes 33 et prévoir des cavités 28 et leurs reliefs 27 correspondants ramenés symétriquement à l'intérieur du dispositif de verrouillage, voire ne prévoir qu'une cavité 28 avec son relief 27, centrés ou non. Il est également aisé d'étendre cette réalisation à un bloc destiné au verrouillage d'un plus grand nombre d'appareils, ou encore au verrouillage d'un groupe donné d'appareils d'épaisseurs différentes juxtaposés selon un ordre constant dans la pratique.

## Revendications

1. Dispositif de verrouillage d'une borne (3) de raccordement et de pontage dite à cage d'un appareil électrique modulaire, de manière à interdire tout pontage et toutes modifications de connexion à ladite borne (3), laquelle borne (3) comporte une vis de serrage (5) normalement accessible de l'extérieur de l'appareil électrique modulaire, appareil qui comprend un boîtier (1) présentant, sur ses faces avant et/ou arrière, un logement (2) pour la borne à cage (3), surmonté d'une cavité de pontage (6) qui débouche latéralement et frontalement et dans laquelle se trouve la tête (7) de la vis de serrage (5) de la borne à cage (3), la partie (9) du boîtier (1) qui forme le sommet de ladite cavité de pontage (6) présentant une ouverture supérieure (11) d'accès à la tête (7) de la vis de serrage (5), le dispositif comprenant une première partie qui est une pièce de blocage (13) réalisée en matériau isolant électriquement et agencée de manière à venir en prise de façon amovible dans la cavité de pontage (6), par insertion dans celle-ci, et une deuxième partie qui est un moyen de verrouillage agencé de manière à venir verrouiller ladite pièce de blocage après que cette dernière a été mise en place dans la cavité de pontage, caractérisé en ce que la pièce de blocage (13) et le moyen de verrouillage (26) sont réalisés en une seule pièce en matériau isolant électriquement et présentent des moyens complémentaires formant témoin d'effraction en cas de tentative de déverrouillage, le dispositif de verrouillage étant agencé de manière à bloquer l'accès à la vis de serrage (5) et à la cavité de pontage (6).

2. Dispositif de verrouillage selon la revendication 1, caractérisé en ce que la pièce de blocage (13) vient se clipser élastiquement et de façon amovible dans ladite cavité de pontage (6) et le moyen de verrouillage est un élément rigide (26) conçu pour venir verrouiller ladite pièce de blocage (13) par entretoisement.

3. Dispositif de verrouillage selon la revendication 2, caractérisé en ce que l'élément rigide est un rabat (26) articulé sur ladite pièce de blocage (13).

4. Dispositif de verrouillage selon l'une quelconque des revendications 1 à 3, caractérisé en ce que l'élément rigide (26) et la pièce de blocage (13) comprennent chacun au moins une oreille ou analogue (29, 31) percée d'au moins un trou (30, 32), les deux trous (30, 32) respectifs étant conçus pour venir coïncider lorsque l'élément rigide (26) et la pièce de blocage (13) sont en place de façon à permettre le passage d'un câble à plomber (36) ou analogue servant de témoin d'effraction.

5. Dispositif de verrouillage selon l'une quelconque des revendications 1 à 4, caractérisé en ce que la pièce de blocage (13) a sensiblement la forme d'un U en coupe transversale avec une branche inférieure (18) présentant un évidement (19) pour la vis de serrage (5) et une branche supérieure (17) munie d'au moins un relief supérieur (24) conçu pour venir coopérer avec un moyen de butée (10) préexistant ou prévu spécialement dans ladite partie de boîtier (9) formant le sommet de la cavité de pontage (6), la pièce de blocage (13) étant en outre munie de parois latérales (34).

6. Dispositif de verrouillage selon la revendication 5, caractérisé en ce que la branche inférieure (18) de la pièce de blocage (13) se prolonge par un rabat (26) dont elle est séparée par une partie amincie (25) formant charnière et qui est munie à son extrémité opposée à la partie amincie (25) d'au moins un relief (27), tandis que la branche supérieure (17) présente au moins un renfoncement ou passage (28) destiné à recevoir par verrouillage élastique ledit relief (27) du rabat (26).

7. Bloc (12) destiné au verrouillage des bornes (3) de raccordement et de pontage de plusieurs appareils électriques modulaires juxtaposés, caractérisé en ce qu'il est agencé de manière à s'étendre dans l'ensemble des cavités de pontage (6) des appareils électriques modulaires juxtaposés et qu'il comprend au moins un dispositif de verrouillage (13) selon l'une quelconque des revendications 1 à 6.

8. Bloc de verrouillage (12) selon la revendication 7, caractérisé en ce que les parois (18, 22, 23, 26) constituant la pièce de blocage et l'élément rigide du dispositif de verrouillage (13) se prolongent latéralement pour former ledit bloc (12).

9. Bloc de verrouillage (12) selon la revendication 7 ou 9, caractérisé en ce qu'il a une longueur égale à un multiple du module des appareils électriques modulaires.

10. Bloc de verrouillage selon la revendication 9, caractérisé en ce qu'il présente au moins deux dispositifs de verrouillage (13, 14) dans son application au verrouillage simultané de plus de quatre modules.

11. Bloc de verrouillage selon l'une quelconque des revendications 7 à 9, caractérisé en ce qu'au moins l'un des dispositifs de verrouillage (13, 14) et/ou certains au moins des modules (15, 16) du bloc de verrouillage (12) sont séparés des dispositifs de verrouillage (13, 14) ou des modules (15, 16) adjacents par une zone d'affaiblissement (38) permettant la séparation manuelle des dispositifs de verrouillage (13, 14) et/ou modules (15, 16).

12. Bloc de verrouillage selon la revendication 11, caractérisé en ce qu'il comporte des parois (35) d'un côté ou de part et d'autre des zones d'affaiblissement (38), ces parois (35) étant conçues pour former des parois latérales après séparation des dispositifs de verrouillage (13, 14) et/ou module (15, 16).

## Patentansprüche

1. Verriegelungsvorrichtung für eine Anschluß- und Überbrückungsklemme (3), genannt Buchsenklemme, für ein modulares elektrisches Gerät, derart, daß jegliche Überbrückung und jegliche Veränderungen der Anschlüsse mit dieser Klemme (3) verhindert sind, wobei die Klemme (3) eine Stellschraube (5) aufweist, die normalerweise von der Außenseite des modularen elektrischen Geräts zugängig ist, wobei das Gerät ein Gehäuse (1) aufweist, das an seiner Vorder- und Rückseite eine Aufnahme (2) für die Buchsenklemme (3) aufweist, die von einer überbrückungsaussparung (6) überragt ist, die sich seitlich und frontal öffnet und in der sich der Kopf (7) der Stellschraube (5) der Buchsenklemme (3), der Teil (9) des Gehäuses (1) befinden, der den Scheitel der Überbrückungsaussparung (6) bildet, die eine obere Zugangsöffnung (11) zum Kopf (7) der Stellschraube (5) aufweist, wobei die Vorrichtung einen ersten Teil, der ein Blockierungsteil (13) ist, der aus elektrisch isolierendem Material ausgeführt ist und derart angeordnet ist, daß er lose in der Überbrückungsaussparung (6) durch Einführen in diese in Eingriff gelangt, und einen zweiten Teil aufweist, der ein Verriegelungsmittel ist, das derart angeordnet ist, daß es den Blockierungsteil verriegelt, nachdem dieser in der Überbrückungsaussparung angeordnet worden ist, dadurch gekennzeichnet, daß der Blockierungsteil (13) und das Verriegelungsmittel (26) einstückig aus elektrisch isolierendem Material ausgeführt sind und ergänzende Mittel aufweisen, die ein Zeichen für einen Aufbruch im Fall des Versuchs der Entriegelung bilden, wobei die Verriegelungsvorrichtung derart angeordnet ist, daß der Zugang zu der Stellschraube (5) und der Überbrückungsaussparung (6) blockiert ist.

2. Verriegelungsvorrichtung nach Anspruch 1,
dadurch gekennzeichnet, daß der Blockierungsteil (13) elastisch und lösbar sich in der Überbrückungsaussparung (6) einklemmt, und das Verriegelungsmittel ein starres Teil (26) ist, das ausgelegt ist, um den Blockierungsteil (13) mittels Verankerung zu verriegeln.

3. Verriegelungsvorrichtung nach Anspruch 2,
dadurch gekennzeichnet, daß das starre Teil eine ausschwenkbare Klappe (26) auf dem Blockierungsteil (13) ist.

4. Verriegelungsvorrichtung nach einem der Ansprüche 1 bis 3,
dadurch gekennzeichnet, daß das starre Teil (26) und der Blockierungsteil (13) jeweils mindestens einen Ansatz (29, 31) oder dergleichen aufweisen, der mit mindestens einem Loch (30, 32) durchbohrt ist, wobei die beiden jeweiligen Löcher (30, 32) ausgelegt sind, zusammenzutreffen, wenn das starre Teil (26) und der Blockierungsteil (13) derart in Stellung sind, daß sie den Durchtritt eines zu verplombenden Kabels (36) oder dergleichen, das als Zeichen für einen Aufbruch dient, gestatten.

5. Verriegelungsvorrichtung nach einem der Ansprüche 1 bis 4,
dadurch gekennzeichnet, daß der Blockierungsteil (13) im wesentlichen die Form eines U im Querschnitt mit einem unteren Schenkel (18) hat, der eine Aufnahme (19) für die Stellschraube (5) bildet, und mit einem oberen Schenkel (17), der mindestens mit einem oberen Relief (24) versehen ist, das ausgelegt ist, mit einem Anschlagmittel (10), das bereits vorhanden ist oder speziell in dem Gehäuseteil (9) vorgesehen ist, zusammenzuwirken, das den Scheitel der Überbrückungsaussparung (6) bildet, wobei der Blockierungsteil (13) außerdem mit Seitenwänden (34) versehen ist.

6. Verriegelungsvorrichtung nach Anspruch 5,
dadurch gekennzeichnet, daß der untere Schenkel (18) des Blockierungsteils sich mittels einer Klappe (26) fortsetzt, von der er mittels eines verjüngten Teils (25) getrennt ist, das ein Scharnier bildet und das an seinem Ende gegenüberliegend zum verjüngten Teil (25) mit mindestens einem Relief (27) versehen ist, während der obere Schenkel (17) mindestens eine Verstärkung oder einen Durchlaß (28) aufweist, der dazu bestimmt ist, das Relief (27) der Klappe (26) mittels elastischer Verriegelung aufzunehmen.

7. Block (12), der zur Verriegelung der Anschluß- und Überbrückungsklemmen (3) von mehreren nebeneinanderliegenden modularen elektrischen Geräten bestimmt ist,
dadurch gekennzeichnet, daß er derart ausgelegt ist, daß er sich in den gesamten Überbrückungsaussparungen (6) der nebeneinanderliegenden modularen elektrischen Geräte erstreckt, und daß er mindestens eine Verriegelungsvorrichtung (13) nach einem der Ansprüche 1 bis 6 aufweist.

8. Verriegelungsblock (12) nach Anspruch 7,
dadurch gekennzeichnet, daß die Wände (18, 22, 23, 26), welche den Blockierungsteil und das starre Teil der Verriegelungsvorrichtung (13) bilden, sich seitlich fortsetzen, um den Block (12) zu bilden.

9. Verriegelungsblock (12) nach Anspruch 7 oder 9,
dadurch gekennzeichnet, daß er eine Länge hat, die einem Vielfachen des Moduls der modularen elektrischen Geräte entspricht.

10. Verriegelungsblock nach Anspruch 9,
dadurch gekennzeichnet, daß er mindestens zwei Verriegelungsvorrichtungen (13, 14) bei seiner Anwendung bei gleichzeitiger Verriegelung von mehr als vier Modulen aufweist.

11. Verriegelungsblock nach einem der Ansprüche 7 bis 9,
dadurch gekennzeichnet, daß mindestens eine der Verriegelungsvorrichtungen (13, 14) und/oder mindestens einige der Module (15, 16) des Verriegelungsblocks (12) von den Verriegelungsvorrichtungen (13, 14) oder den benachbarten Modulen (15, 16) mittels einer Abschwächungszone (38) getrennt sind, die die manuelle Trennung der Verriegelungsvorrichtungen (13, 14) und/oder Module (15, 16) gestattet.

12. Verriegelungsblock nach Anspruch 11,
dadurch gekennzeichnet, daß er Wände (35) auf einer Seite oder beiderseits der Abschwächungszonen (38) aufweist, wobei diese Wände (35) ausgelegt sind, Seitenwände nach der Trennung der Verriegelungsvorrichtungen (13, 14) und/oder Module (15, 16) zu bilden.

## Claims

1. Device for locking a so-called cage-type connecting and bridging terminal (3) of a modular electrical apparatus, so as to prevent any bridging or changes to the connection to said terminal (3), said terminal (3) comprising a clamping screw (5) which is normally accessible from outside the modular electrical apparatus, said apparatus comprising a housing (1) which has, on its front and/or rear surfaces, a recess (2) for the cage-type terminal (3) surmounted by a bridging cavity (6) which opens out laterally and frontally and in which is located the head (7) of the clamping screw (5) of the cage-type terminal (3), the part (9) of the housing (1) which forms the top of said bridging cavity (6) having an upper opening (11) giving access to the head (7) of the clamping screw (5), the device comprising a first part which is a blocking member (13) made from an electrically insulating material and arranged so as to engage removably in the bridging cavity (6), by insertion therein, and a second part which is a locking means arranged so as to lock said blocking member once the latter has been positioned in the bridging cavity, characterised in that the blocking member (13) and the locking means (26) are made from a single piece of electrically insulating material and have complementary means which show up any tampering in the event of an attempt at unlocking, the locking device being arranged so as to deny access to the clamping screw (5) and the bridging cavity (6).

2. Locking device according to claim 1, characterised in that the blocking member (13) is clipped elastically and removably into said bridging cavity (6) and the locking means consist of a rigid element (26) designed to lock said blocking member (13) by bracing it.

3. Locking device according to claim 2, characterised in that the rigid element is a flap (26) articulated on said blocking member (13).

4. Locking device according to any one of claims 1 to 3, characterised in that the rigid element (26) and the blocking member (13) each comprise at least one lug or the like (29, 31) having at least one hole (30, 32) formed therein, the two respective holes (30, 32) being designed so as to be aligned when the rigid element (26) and the blocking member (13) are in position in order to allow a wire (36) or the like to pass through vertically to act as evidence of tampering.

5. Locking device according to any one of claims 1 to 4, characterised in that the blocking member (13) is substantially U-shaped in cross section with a lower branch (18) having a recess (19) for the clamping screw (5) and an upper branch (17) provided with at least one upper boss (24) intended to co-operate with pre-existing or specially provided abutment means (10) in the said part of the housing (9) forming the top of the bridging cavity (6), the blocking member (13) further being provided with side walls (34).

6. Locking device according to claim 5, characterised in that the lower branch (18) of the blocking member (13) is extended by a flap (26) from which it is separated by a thinner portion (25) forming a hinge, and which is provided at its end opposite the thinner portion (25) with at least one boss (27), whilst the upper branch (17) has at least one recess or passage (28) intended to accommodate said boss (27) of the flap (26) by resilient engagement.

7. Block (12) intended for locking the connecting and bridging terminals (3) of a plurality of juxtaposed modular apparatus, characterised in that it is arranged so as to extend through all the bridging cavities (6) of the juxtaposed modular electrical apparatus and comprises at least one locking device (13) according to any one of claims 1 to 6.

8. Locking block (12) according to claim 7, characterised in that the walls (18, 22, 23, 26)) which constitute the blocking member and the rigid element of the locking device (13) are extended laterally to form said block (12).

9. Locking block (12) according to claim 7 or 9, characterised in that its length is equal to a multiple of the module of the modular electrical apparatus.

10. Locking block according to claim 9, characterised in that it has at least two locking devices (13, 14) when used for locking more than four modules simultaneously.

11. Locking block according to any one of claim s 7 to 9, characterised in that at least one of the locking devices (13, 14) and/or at least some of the modules (15, 16) of the locking block (12) are separated from the locking devices (13, 14) or the adjacent modules (15, 16) by a weakened zone (38) which allows manual separation of the locking devices (13, 14) and/or modules (15, 16).

12. Locking block according to claim 11, characterised in that it comprises walls (35) on one side or on both sides of the weakened zones (38), these walls (35) being designed to form side walls after separation of the locking devices (13, 14) and/or module (15, 16).
